# FASCICULE DE BREVET EUROPEEN

(11) **EP 2 911 927 B1**
(45) Date de publication et mention de la délivrance du brevet: **07.12.2016**
(21) Numéro de dépôt: 13785564.9
(22) Date de dépôt: 15.10.2013
(51) Int. Cl.: B60W 30/20, B60W 10/103, B60W 10/06, B60W 10/02, F16F 15/173, F16F 15/20

(54) **PROCEDE DE FILTRATION DES VIBRATIONS D'UN MOTEUR DE VEHICULE HYBRIDE COMPORTANT UNE MACHINE HYDRAULIQUE**
VERFAHREN ZUM FILTERN DER SCHWINGUNGEN EINES HYBRIDFAHRZEUGMOTORS MIT EINER HYDRAULISCHEN MASCHINE
METHOD FOR FILTERING THE VIBRATIONS OF A HYBRID VEHICLE ENGINE COMPRISING A HYDRAULIC MACHINE

(30) Priorité: 25.10.2012 FR 1260173
(43) Date de publication de la demande: 02.09.2015
(73) Titulaire: Technoboost, 75116 Paris (FR)
(72) Inventeur: BALENGHIEN, Olivier, F-93340 Le Raincy (FR); SIROT, Jean Christian, F-75019 Paris (FR)
(74) Mandataire: Rosenberg, Muriel Sylvie
(86) Numéro de dépôt international: PCT/FR2013/052456
(87) Numéro de publication internationale: WO 2014/064365

(56) Documents cités:
- EP-A1- 1 221 394
- FR-A1- 2 970 440
- US-A1- 2010 300 820

## Description

La présente invention concerne un procédé de filtration des vibrations générées par un moteur thermique, pour un véhicule hybride utilisant l'énergie hydraulique, ainsi qu'une chaîne de traction et un véhicule hybride mettant en oeuvre un tel procédé.

Certains types de véhicules hybrides, présentés notamment par le document FR-A1-2970440, comportent une chaîne de traction disposant d'un moteur thermique entraînant par un volant moteur et un amortisseur de filtration des vibrations en torsion, un arbre d'entrée d'une transmission liée aux roues motrices. Une machine hydraulique pouvant travailler en moteur ou en pompe est aussi liée à la transmission, afin de permettre différents modes de fonctionnement.

On peut notamment recharger des accumulateurs de pression hydraulique par un fonctionnement de la machine hydraulique en pompe, entraînée par le moteur thermique, ou par l'inertie du véhicule en récupérant l'énergie cinétique lors des freinages.

On peut aussi en alimentant par les accumulateurs la machine hydraulique fonctionnant en moteur, délivrer une puissance mécanique utilisée pour la traction du véhicule, seule dans un mode de roulage sans émission de gaz polluant « ZEV », ou en combinaison avec la puissance délivrée par le moteur thermique.

Toutefois, dans le cas où la machine hydraulique peut être découplée de la transmission par un système d'embrayage ou de crabotage, il faut alors prévoir un volant moteur et un amortisseur de filtration des vibrations qui conviennent à toutes les conditions de roulage où cette machine et découplée, en particulier si le niveau d'excitation du moteur thermique est élevé, pour assurer le confort.

En effet avec une atténuation insuffisante des vibrations, les excitations du moteur thermique peuvent générer des bruits internes dans la transmission, en particulier dans les boîtes de vitesses à arbres parallèles comprenant des crabots pour l'engagement des rapports, qui peut être à commande manuelle ou automatisée, ainsi que des bourdonnements de la caisse qui est excitée par les vibrations transmises par cette boîte de vitesses.

Une solution pour réduire le niveau des vibrations générées par le moteur thermique, consiste à augmenter l'inertie du volant moteur fixé sur son vilebrequin, ou l'inertie des deux volants dans le cas d'un système à double volant amortisseur comportant un amortisseur entre deux volants.

Toutefois ces solutions augmentent la masse et le coût de ces volants, ainsi que l'inertie globale liée au moteur thermique ce qui diminue les accélérations du véhicule, et augmente la consommation.

La présente invention a notamment pour but d'éviter ces inconvénients de la technique antérieure.

Elle propose à cet effet un procédé de filtration des vibrations en torsion d'un moteur thermique relié par un amortisseur à une transmission entraînant des roues motrices d'un véhicule hybride, une machine hydraulique travaillant en moteur ou en pompe, pouvant être reliée à un arbre de la transmission par un système de couplage, caractérisé en ce que dans un premier mode de fonctionnement comportant un niveau d'excitation des vibrations élevé généré par le moteur thermique, le procédé maintient systématiquement le couplage de la machine hydraulique pour ajouter une inertie sur l'arbre de transmission, cette machine travaillant ou ne travaillant pas, et dans un deuxième mode de fonctionnement comportant un niveau d'excitation des vibrations plus faible, le procédé autorise un découplage de la machine hydraulique.

Un avantage du procédé de filtration selon l'invention, est qu'en laissant la machine hydraulique couplée à l'arbre de la transmission dans le cas d'un niveau d'excitation élevé, avec ou sans besoin de fonctionnement de cette machine, on dispose alors d'une inertie complémentaire donnée par le rotor de la machine permettant d'obtenir un niveau de vibration acceptable, avec une inertie du volant moteur qui peut être réduite.

On peut ainsi notamment réduire l'inertie du volant moteur à une valeur juste nécessaire, permettant d'obtenir un niveau de vibration acceptable dans le cas de niveaux d'excitation faibles, quand la machine hydraulique est découplée.

Le procédé de filtration selon l'invention peut de plus comporter une ou plusieurs des caractéristiques suivantes, qui peuvent être combinées entre elles.

En particulier, le procédé de filtration peut être prévu pour utiliser une machine hydraulique comprenant une cylindrée variable.

Avantageusement, pour le premier mode de fonctionnement, dans le cas où la machine hydraulique ne travaille pas, le procédé demande systématiquement une cylindrée nulle.

L'invention a aussi pour objet une chaîne de traction disposant d'un moteur thermique relié par un amortisseur à une transmission entraînant des roues motrices d'un véhicule hybride, et une machine hydraulique travaillant en moteur ou en pompe, pouvant être reliée à un arbre de la transmission par un système de couplage, cette chaîne de traction comportant des moyens mettant en oeuvre un procédé de filtration des vibrations comprenant l'une quelconque des caractéristiques précédentes.

Avantageusement, le système de couplage comporte un embrayage ou un crabot.

Avantageusement, le rotor de la machine hydraulique comporte une inertie augmentée de manière spécifique pour cette application en filtration des vibrations.

En particulier, le rotor de la machine hydraulique peut comporter une inertie rapportée sur l'arbre de la transmission, en tenant compte de la démultiplication reliant cet arbre à ce rotor, qui est de l'ordre de 10g.m².

Selon un mode de réalisation, la machine hydraulique est reliée directement à un arbre primaire de la transmission, réalisant l'entrée dans cette transmission.

La transmission peut être une boîte de vitesses du type à arbres parallèles, comprenant des crabots pour l'engagement des rapports.

L'invention a de plus pour objet un véhicule hybride comportant une chaîne de traction disposant d'un moteur thermique et d'une machine hydraulique pouvant assurer tous les deux la traction du véhicule, cette chaîne de traction comportant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est un schéma d'une chaîne de traction, qui peut mettre en oeuvre un procédé de filtration des vibrations selon l'invention ; et
- la figure 2 est un schéma fonctionnel de ce procédé de filtration.

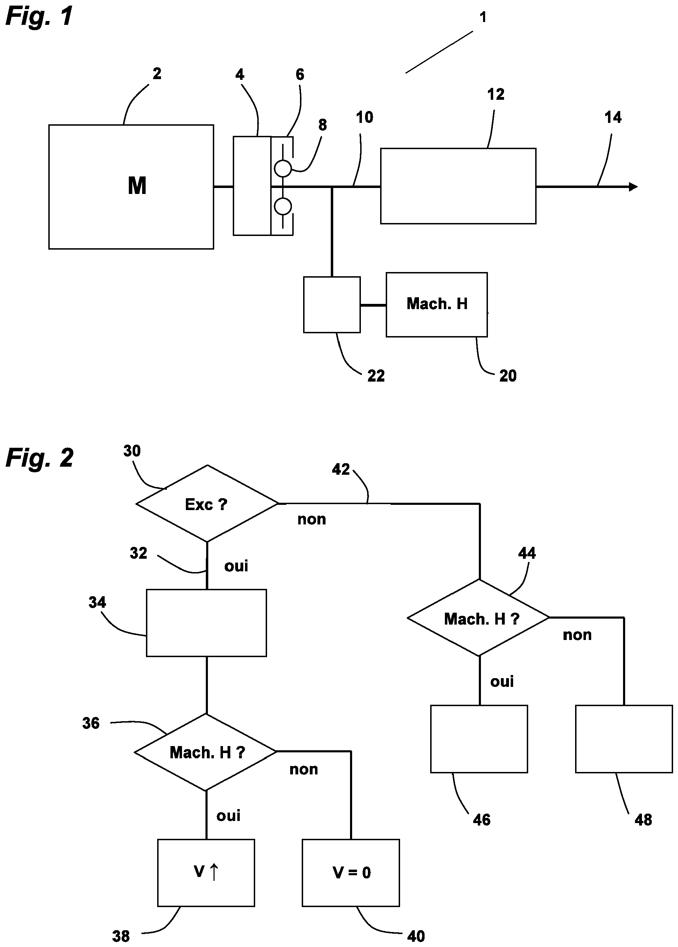

La figure 1 présente une chaîne de traction 1 comportant un moteur thermique 2 comprenant un volant d'inertie simple 4 fixé sur son vilebrequin, qui comporte un mécanisme d'embrayage 6 équipé d'un disque d'embrayage disposant d'un amortisseur des vibrations en torsion 8.

En variante, dans le cas d'un moteur thermique 2 générant des excitations élevées, on peut utiliser un double volant amortisseur comprenant deux volants d'inertie avec un amortisseur de torsion disposé entre eux, qui donne une réduction des vibrations plus importante.

L'embrayage 6 entraîne un arbre primaire 10 réalisant l'entrée dans une transmission 12, comme une boîte de vitesses par exemple, qui est reliée aux roues motrices 14 du véhicule.

Une machine hydraulique 20 à cylindrée variable, pouvant fonctionner en moteur ou en pompe, est reliée à l'arbre primaire 10 par un système de couplage 22 pouvant comporter un embrayage ou un crabot.

De manière connue, on réalise une liaison par le système de couplage 22 pour entraîner la machine hydraulique 20 travaillant en pompe, quand elle doit recharger en pression un accumulateur hydraulique, à partir d'une puissance venant du moteur thermique 2 ou des roues motrices 14. On réalise aussi un couplage quand la machine hydraulique 20 travaille en moteur, pour délivrer une puissance mécanique en consommant la pression hydraulique de l'accumulateur, afin de démarrer le moteur thermique, ou d'entraîner les roues motrices.

Dans les autres cas le système de couplage 22 est désengagé de manière à ne pas entraîner la machine hydraulique 20 à vide, pour limiter les pertes internes.

Pour ces procédés de fonctionnement connus, on dimensionne la chaîne de traction 1 de la manière suivante. On donne au volant moteur 4 une inertie suffisante, dépendant des caractéristiques de l'amortisseur des vibrations 8, pour assurer un niveau de vibration suffisamment faible dans la transmission 12 dans tous les cas de fonctionnement du moteur thermique 2, en particulier dans les cas où le niveau d'excitation est élevé, et la machine hydraulique 20 est découplée de l'arbre primaire 10 qui comporte alors une faible inertie.

Le volant moteur 4, ou les deux volants dans le cas d'un double volant amortisseur, doivent comporter alors une masse et une inertie relativement importante pour assurer un bon niveau de confort.

La figure 2 présente le fonctionnement du procédé de filtration selon l'invention, comportant une première sélection 30 vérifiant si le niveau d'excitation généré par le moteur thermique 2 est élevé.

Dans le cas 32 où le niveau d'excitation généré est élevé, on a alors un couplage systématique 34 de la machine hydraulique 20 sur l'arbre 10 de la transmission 12, avec ou sans demande de fonctionnement de cette machine en moteur ou en pompe, de manière à disposer obligatoirement d'une inertie rapportée sur cet arbre qui est importante. On réalise ainsi un système de réduction des vibrations utilisant le principe d'un double volant qui est efficace, avec le volant moteur 4 et la machine hydraulique 20 formant deux inerties comprenant l'amortisseur 8 entre eux.

On peut donner alors au rotor de la machine hydraulique 20 une inertie plus élevée, et si nécessaire on modifie les caractéristiques de l'amortisseur 8, pour compenser une réduction de l'inertie du volant moteur simple 4, ou du double volant amortisseur si le moteur en est équipé.

En particulier, le rotor de la machine hydraulique 20 peut comporter une inertie rapportée sur l'arbre primaire 10 de la transmission 12, en tenant compte de la démultiplication reliant cet arbre à ce rotor, qui est de l'ordre de 10g.m².

Ensuite, le calculateur de contrôle de la chaîne de traction 1 détermine par une sélection 36 un besoin de fonctionnement de la machine hydraulique 20 en moteur ou en pompe. Dans le cas positif le procédé ajuste 38 le volume variable de cette machine afin d'obtenir la cylindrée demandée. Dans le cas contraire il demande systématiquement une cylindrée nulle 40, afin de ne pas faire circuler de fluide, et de réduire les pertes de cette machine au minimum.

Dans le cas 42 où le niveau de l'excitation générée par le moteur thermique 2 est faible, le découplage de la machine hydraulique 20 est autorisé. Une sélection 44 détermine si le calculateur de contrôle a besoin d'un fonctionnement de la machine hydraulique 20 en moteur ou en pompe.

Dans le cas où ce besoin est présent, le procédé demande un couplage 46 la machine hydraulique 20 avec l'arbre 10 de la transmission 12.

Dans le cas où ce besoin n'est pas présent, le procédé demande un découplage 48 de la machine hydraulique 20, afin de diminuer les pertes dues à l'entraînement de cette machine, notamment en réduisant l'inertie globale, ainsi que les frottements. L'amortissement des vibrations générées par le moteur thermique 2, est alors réalisé uniquement par le volant moteur 4 comportant une inertie réduite et par l'amortisseur de vibration 8, qui sont suffisants pour ce niveau d'excitation modéré.

On notera que dans le cas d'une vitesse de rotation élevée du moteur thermique 2, on ne peut généralement pas coupler la machine hydraulique 20 avec l'arbre 10 car cette machine tournerait trop vite, mais le niveau d'excitation générée par ce moteur est alors suffisamment faible pour ne pas avoir besoin d'additionner l'inertie du rotor de la machine hydraulique.

On peut ainsi dans la plupart des cas de fonctionnement du véhicule, par exemple lors des roulages stabilisés à des vitesses suffisamment élevées, comme sur l'autoroute, réaliser des économies d'énergie par la réduction des frottements et de l'inertie globale avec le découplage de la machine hydraulique. Dans les autres cas on obtient un bon niveau de réduction des vibrations, qui permet d'assurer le confort.

## Revendications

1. Procédé de filtration des vibrations en torsion d'un moteur thermique (2) relié par un amortisseur (8) à une transmission (12) entraînant des roues motrices (14) d'un véhicule hybride, une machine hydraulique (20) travaillant en moteur ou en pompe, pouvant être reliée à un arbre de la transmission (10) par un système de couplage (22), **caractérisé en ce que** dans un premier mode de fonctionnement (32) comportant un niveau d'excitation des vibrations élevé généré par le moteur thermique (2), le procédé maintient systématiquement le couplage de la machine hydraulique (34) pour ajouter une inertie sur l'arbre de transmission (10), cette machine travaillant ou ne travaillant pas, et dans un deuxième mode de fonctionnement (42) comportant un niveau d'excitation des vibrations plus faible, le procédé autorise un découplage (48) de la machine hydraulique.

2. Procédé de filtration des vibrations selon la revendication 1, **caractérisé en ce qu'**il est prévu pour utiliser une machine hydraulique (20) comprenant une cylindrée variable.

3. Procédé de filtration des vibrations selon la revendication 2, **caractérisé en ce que** pour le premier mode de fonctionnement (32), dans le cas où la machine hydraulique (20) ne travaille pas, il demande systématiquement une cylindrée nulle (40).

4. Chaîne de traction disposant d'un moteur thermique (2) relié par un amortisseur (8) à une transmission (12) entraînant des roues motrices (14) d'un véhicule hybride, et une machine hydraulique (20) travaillant en moteur ou en pompe, pouvant être reliée à un arbre de la transmission (10) par un système de couplage (22), **caractérisée en ce qu'**elle comporte des moyens mettant en oeuvre un procédé de filtration des vibrations réalisé selon l'une quelconque des revendications précédentes.

5. Chaîne de traction selon la revendication 4, **caractérisée en ce que** le système de couplage (22) comporte un embrayage ou un crabot.

6. Chaîne de traction selon la revendication 4 ou 5, **caractérisée en ce que** le rotor de la machine hydraulique (20) comporte une inertie augmentée de manière spécifique pour cette application en filtration des vibrations.

7. Chaîne de traction selon la revendication 6, **caractérisée en ce que** le rotor de la machine hydraulique (20) comporte une inertie rapportée sur l'arbre (10) de la transmission (12), en tenant compte de la démultiplication reliant cet arbre à ce rotor, qui est de l'ordre de 10g.m².

8. Chaîne de traction selon l'une des revendications 4 à 7, **caractérisée en ce que** la machine hydraulique (20) est reliée directement à un arbre primaire (10) de la transmission (12), réalisant l'entrée dans cette transmission.

9. Chaîne de traction selon l'une des revendications 4 à 8, **caractérisée en ce que** la transmission (10) est du type à arbres parallèles, comprenant des crabots pour l'engagement des rapports.

10. Véhicule hybride comportant une chaîne de traction (1) disposant d'un moteur thermique (2) et d'une machine hydraulique (20) pouvant assurer tous les deux la traction du véhicule, **caractérisé en ce que** cette chaîne de traction est réalisée selon l'une quelconque des revendications 4 à 9.

## Patentansprüche

1. Verfahren zum Filtern der Torsionsschwingungen eines Verbrennungsmotors (2), der durch einen Stoßdämpfer (8) mit einem Getriebe (12) verbunden ist, das die Antriebsräder (14) eines Hybridfahrzeugs antreibt, wobei eine hydraulische Maschine (20) als Motor oder als Pumpe fungiert, die durch ein Kupplungssystem (22) mit einer Welle des Getriebes (10) verbunden werden kann, **dadurch gekennzeichnet, dass** das Verfahren in einer ersten Betriebsart (32), die ein hohes, durch den Verbrennungsmotor (2) erzeugtes Anregungsniveau für die Schwingungen umfasst, die Kupplung der hydraulischen Maschine (34) systematisch beibehält, um eine Trägheit auf der Getriebewelle (10) zu vergrößern, ob diese Maschine nun arbeitet oder nicht arbeitet, und das Verfahren in einer zweiten Betriebsart (42), die ein geringeres Anregungsniveau für die Schwingungen umfasst, das Abkoppeln (48) der hydraulischen Maschine erlaubt.

2. Verfahren zum Filtern der Schwingungen nach Anspruch 1, **dadurch gekennzeichnet, dass** es vorgesehen ist, um eine hydraulische Maschine (20), einen variablen Hubraum umfassend, zu verwenden.

3. Verfahren zum Filtern der Schwingungen nach Anspruch 2, **dadurch gekennzeichnet, dass** es bei der ersten Betriebsart (32), für den Fall, dass die hydraulische Maschine (20) nicht arbeitet, systematisch einen Hubraum Null (40) anfordert.

4. Antriebsstrang, der über einen Verbrennungsmotor (2) verfügt, der durch einen Stoßdämpfer (8) mit einem Getriebe (12) verbunden ist, das die Antriebsräder (14) eines Hybridfahrzeugs antreibt, sowie eine hydraulische Maschine (20), die als Motor oder als Pumpe fungiert, die durch ein Kupplungssystem (22) mit einer Welle des Getriebes (10) verbunden werden kann, **dadurch gekennzeichnet, dass** er Mittel umfasst, die ein Verfahren zum Filtern der Schwingungen umsetzen, das nach irgendeinem der vorherigen Ansprüche realisiert wird.

5. Antriebsstrang nach Anspruch 4, **dadurch gekennzeichnet, dass** das Kupplungssystem (22) eine Kupplung oder eine Klaue umfasst.

6. Antriebsstrang nach Anspruch 4 oder 5, **dadurch gekennzeichnet, dass** der Rotor der hydraulischen Maschine (20) eine spezifisch erhöhte Trägheit für diese Anwendung zur Filterung der Schwingungen umfasst.

7. Antriebsstrang nach Anspruch 6, **dadurch gekennzeichnet, dass** der Rotor der hydraulischen Maschine (20) eine auf die Welle (10) des Getriebes (12) beigebrachte Trägheit umfasst, wobei er die Übersetzung berücksichtigt, mit der diese Welle mit diesem Rotor verbunden ist, die in der Größenordnung von 10 g.m² liegt.

8. Antriebsstrang nach einem der Ansprüche 4 bis 7, **dadurch gekennzeichnet, dass** die hydraulische Maschine (20) direkt mit einer Antriebswelle (10) des Getriebes (12) verbunden ist, die den Eingang in dieses Getriebe bildet.

9. Antriebsstrang nach einem der Ansprüche 4 bis 8, **dadurch gekennzeichnet, dass** das Getriebe (10) ein Parallelwellengetriebe ist, welches Klauen zum Einlegen der Gänge umfasst.

10. Hybridfahrzeug, einen Antriebsstrang (1) umfassend, der über einen Verbrennungsmotor (2) und eine hydraulische Maschine (20) verfügt, welche beide für den Antrieb des Fahrzeugs sorgen können, **dadurch gekennzeichnet, dass** dieser Antriebsstrang nach irgendeinem der Ansprüche 4 bis 9 realisiert wird.

## Claims

1. Method for filtering torsion vibrations of a heat engine (2) connected by a damper (8) to a transmission (12) driving the driven wheels (14) of a hybrid vehicle, a hydraulic machine (20) working as a motor or as a pump, being able to be connected to a shaft of the transmission (10) by a coupling system (22), **characterised in that**, in a first operating mode (32) comprising a high vibration excitation level generated by the heat engine (2), the method systematically maintains the coupling of the hydraulic machine (34) in order to add inertia to the transmission shaft (10), this machine working or not working, and, in a second operating mode (42) comprising a lower vibration excitation level, the method enables decoupling (48) of the hydraulic machine.

2. Vibration filtration method according to claim 1, **characterised in that** provision is made for using a hydraulic machine (20) comprising a variable displacement.

3. Vibration filtration method according to claim 2, **characterised in that**, for the first operating mode (32), in the case where the hydraulic machine (20) is not working, it systematically demands zero displacement (40).

4. Traction chain having a heat engine (2) connected by a damper (8) to a transmission (12) driving the driven wheels (14) of a hybrid vehicle, and a hydraulic machine (20) working as a motor or as a pump, being able to be connected to a transmission shaft (10) by a coupling system (22), **characterised in that** it comprises means using a vibration filtration method implemented according to any of the preceding claims.

5. Traction chain according to claim 4, **characterised in that** the coupling system (22) comprises a clutch or a dog.

6. Traction chain according to claim 4 or 5, **characterised in that** the rotor of the hydraulic machine (20) comprises inertia increased specifically for this vibration filtration application.

7. Traction chain according to claim 6, **characterised in that** the rotor of the hydraulic machine (20) comprises inertia attached to the shaft (10) of the transmission (12), taking account of the step-down connecting this shaft to this rotor, which is around 10 g.m².

8. Traction chain according to one of claims 4 to 7, **characterised in that** the hydraulic machine (20) is connected directly to a primary shaft (10) of the transmission (12), effecting the input to this transmission.

9. Traction chain according to one of claims 4 to 8, **characterised in that** the transmission (10) is of the parallel shaft type, comprising dogs for engaging the ratios.

10. Hybrid vehicle comprising a traction chain (1) having a heat engine (2) and a hydraulic machine (20) both able to provide the traction for the vehicle, **characterised in that** this traction chain is implemented according to any of claims 4 to 9.
